# EUROPEAN PATENT APPLICATION

(11) **EP 4 837 980 A1**
(43) Date of publication of application: **11.11.2026**
(21) Application number: 25782338.5
(22) Date of filing: 30.01.2025
(51) Int. Cl.: C21B 13/02, C21B 11/02, C22B 5/12, F27D 3/10, F27D 17/20

(54) **METHOD FOR PRODUCING REDUCED IRON**

(30) Priority: 02.04.2024 JP 2024059600
(71) Applicant: Nippon Steel Corporation, Tokyo 100-8071 (JP)
(72) Inventor: IIDA, Hiroyuki, Tokyo 100-8071 (JP)
(74) Representative: Vossius & Partner Patentanwälte Rechtsanwälte mbB
(86) International application number: PCT/JP2025/002981
(87) International publication number: WO 2025/211000

(57) **Abstract**

A method for producing reduced iron includes: a raw material charging step of charging a raw material into an inside of a shaft furnace; a reduction step of reacting the raw material with a reducing gas in the shaft furnace to obtain reduced iron and an exhaust gas after reduction; and an exhaust gas circulation step of circulating the exhaust gas after reduction and using the exhaust gas after reduction as a part of the reducing gas. The raw material charging step includes, in the following order, a depressurizing step, a first purging step, a raw material-introducing step, a second purging step, a pressure-equalizing step, and a raw material-discharging step; the exhaust gas circulation step includes a dehydrating step of removing water from the exhaust gas after reduction; the purge gas is an inert gas; and the pressure-equalizing gas is a gas obtained by removing water from the exhaust gas in the dehydrating step.

## Description

### TECHNICAL FIELD

The present invention relates to a method for producing reduced iron.

Priority is claimed on Japanese Patent Application No. 2024-059600, filed April 2, 2024, the content of which is incorporated herein by reference.

### BACKGROUND ART

Currently, reduced iron is produced by shaft furnace operations using natural gas (NG) as a reducing gas, such as HyL process and Midrex process.

In the production of the reduced iron, iron oxide as a raw material is charged through a plurality of hoppers from an upper portion of a shaft furnace. When a raw material is charged into a charging hopper to be filled with the raw material, a pressure in the hopper has to be atmospheric pressure. However, when the raw material is supplied from the hopper to the shaft furnace, it is required that the pressure in the hopper is equal to a pressure of the shaft furnace. Therefore, before the raw material is transferred from the hopper to the shaft furnace, it is necessary to perform pressure equalization between the pressures.

In a purge operation for preventing an oxidation reaction with reducing gas remaining in a hopper for pressure equalization (pressure-equalizing hopper) after charging the raw material and in a pressurization operation for making the pressure in the hopper equal to the pressure in the furnace before charging the raw material, an inert gas (usually nitrogen gas) is used as a gas used for the pressure equalization.

The inert gas enters the furnace together with the raw material to be mixed with the reducing gas. The inert gas is accumulated in the gas during circulation of the reducing gas and lowers a reducing capability of the reducing gas. Therefore, in the related art, it has been necessary to release a circulating gas as appropriate in order to prevent the concentration.

In contrast, in a method for producing carburized sponge iron, disclosed in Patent Document 1, hydrogen gas is used as a source gas, and carbon dioxide is used as a pressure-equalizing gas.

### Citation List

### Patent Document

Patent Document 1: PCT International Publication No. WO2022/115024

### SUMMARY OF INVENTION

### Technical Problem

However, in the method used in Patent Document 1, since the carbon dioxide gas is used as the pressure-equalizing gas, there is a risk that carbon dioxide in an amount greater than an amount consumed in carburization enters the shaft furnace. There is a problem in that, when the concentration of carbon dioxide increases in the shaft furnace, reducing power decreases.

The present invention has been made in view of the above circumstances, and an object of the present invention is to provide a method for producing reduced iron, which can suppress concentration of unnecessary components such as nitrogen and carbon dioxide and maintain reducing performance. Here, the unnecessary components refer to components that are not used in a reduction reaction, such as nitrogen, carbon dioxide, and water.

### Solution to Problem

In order to solve the above problems, the present invention provides the following aspects.
(1) According to an aspect 1 of the present invention, a method for producing reduced iron using a shaft furnace includes:
   a raw material charging step of charging a raw material into an inside of the shaft furnace operating at a pressure higher than atmospheric pressure, from a charging hopper storing the raw material through a pressure-equalizing hopper that performs pressure adjustment;
   a reduction step of, after the raw material charging step, reacting the raw material with a reducing gas in the shaft furnace to obtain reduced iron and an exhaust gas after reduction; and
   an exhaust gas circulation step of, after the reduction step, circulating the exhaust gas after reduction and using the exhaust gas after reduction as a part of the reducing gas,
   in which the raw material charging step includes
   a depressurizing step of depressurizing the pressure-equalizing hopper from a pressure in the shaft furnace to atmospheric pressure,
   a first purging step of, after the depressurizing step, replacing gas in the pressure-equalizing hopper with a purge gas,
   a raw material-introducing step of, after the first purging step, transferring the raw material from the charging hopper to the pressure-equalizing hopper replaced with the purge gas,
   a second purging step of, after the raw material-introducing step, replacing air introduced into the pressure-equalizing hopper in the raw material-introducing step with the purge gas,
   a pressure-equalizing step of, after the second purging step, pressurizing the pressure-equalizing hopper from atmospheric pressure to the pressure in the shaft furnace with a pressure-equalizing gas, and
   a raw material-discharging step of, after the pressure-equalizing step, transferring the raw material from the pressurized pressure-equalizing hopper into the shaft furnace,
   the exhaust gas circulation step includes
   a dehydrating step of removing water from the exhaust gas after reduction,
   the purge gas is an inert gas, and
   the pressure-equalizing gas is a gas obtained by removing water from the exhaust gas in the dehydrating step.
(2) According to an aspect 2 of the present invention, in the method for producing reduced iron according to the aspect 1,
   the exhaust gas circulation step further includes a decarbonizing step of removing carbon dioxide from the exhaust gas, and
   the pressure-equalizing gas is a gas obtained by removing water and carbon dioxide from the exhaust gas in the dehydrating step and the decarbonizing step.

### Advantageous Effects of Invention

According to each of the above-described aspects of the present invention, it is possible to provide a method for producing reduced iron, which can suppress concentration of unnecessary components such as nitrogen and carbon dioxide and maintain reducing performance.

### BRIEF DESCRIPTION OF DRAWINGS

[FIG. 1] A flowchart showing an example of a direct reduction apparatus according to a first embodiment of the present invention.
[FIG. 2] A flowchart of a method for producing reduced iron according to the first embodiment of the present invention.
[FIG. 3] A flowchart showing an example of a direct reduction apparatus according to a second embodiment of the present invention.
[FIG. 4] A flowchart of a method for producing reduced iron according to the second embodiment of the present invention.

### DESCRIPTION OF EMBODIMENTS

### (First Embodiment)

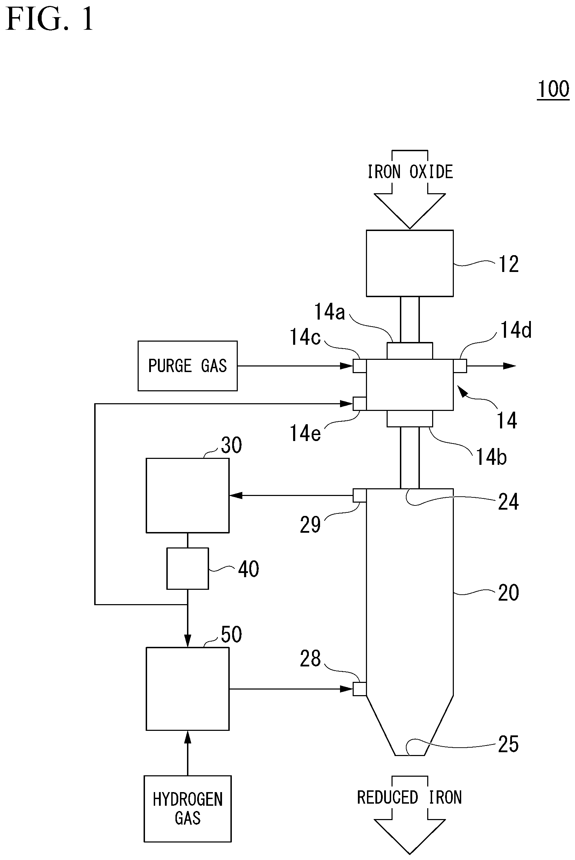

Hereinafter, with reference to the drawings, an apparatus 100 for producing direct reduced iron, which is used to perform a method for producing reduced iron according to a first embodiment, will be described. FIG. 1 is a flowchart showing an example of the direct reduction apparatus according to the first embodiment of the present invention. The apparatus 100 for producing direct reduced iron includes a charging hopper 12 that stores iron oxide as a raw material; a pressure-equalizing hopper 14 that performs pressure adjustment between atmospheric pressure and a pressure in the shaft furnace; a shaft furnace 20 that produces direct reduced iron using hydrogen as a source gas; a dehydration device 30 that dehydrates exhaust gas from the shaft furnace 20 to obtain a circulating gas; a pressurization device 40 that pressurizes the circulating gas; and a heating device 50 that heats the dehydrated circulating gas together with the source gas to form a reducing gas.

### (Charging hopper 12)

The charging hopper 12 stores iron oxide. The charging hopper 12 transfers the iron oxide as a raw material to the pressure-equalizing hopper 14, which is at atmospheric pressure, through a raw material inlet 14a.

### (Pressure-equalizing hopper 14)

After the raw material is transferred into the pressure-equalizing hopper 14, the pressure-equalizing hopper 14 adjusts the pressure therein. After the pressure adjustment, the pressure-equalizing hopper 14 sends the raw material to a raw material charging section 24 of the shaft furnace 20. The pressure-equalizing hopper 14 includes a raw material inlet 14a through which the raw material is transferred from the charging hopper 12; a raw material outlet 14b through which the raw material is sent to the raw material charging section 24 of the shaft furnace 20 after pressure equalization; a purge gas inlet 14c through which a purge gas is introduced; a gas outlet 14d through which the purge gas and the like are discharged; and a pressure-equalizing gas inlet 14e through which a pressure-equalizing gas is introduced into the pressure-equalizing hopper 14. The raw material inlet 14a is connected to the charging hopper 12, and the raw material outlet 14b is connected to the raw material charging section 24 of the shaft furnace 20.

Hereinafter, the operation of the pressure-equalizing hopper 14 will be described. The pressure-equalizing hopper 14 closes the raw material inlet 14a, the raw material outlet 14b, the purge gas inlet 14c, and the pressure-equalizing gas inlet 14e, and opens the gas outlet 14d to be depressurized such that a pressure in the pressure-equalizing hopper 14 becomes atmospheric pressure. Next, the purge gas inlet 14c is opened, and an inert gas as the purge gas is introduced into the pressure-equalizing hopper 14. As a result, furnace gas remaining in the pressure-equalizing hopper 14 can be replaced with the inert gas. Next, the pressure-equalizing hopper 14 closes the purge gas inlet 14c, opens the raw material inlet 14a, and transfers the raw material from the charging hopper 12 to the pressure-equalizing hopper 14 filled with the inert gas. After transferring the raw material, the purge gas inlet 14c is opened to introduce the inert gas into the pressure-equalizing hopper 14. As a result, air introduced into the pressure-equalizing hopper 14 together with the raw material can be replaced with the inert gas. Here, examples of the inert gas include nitrogen gas, a noble gas, CO₂, H₂O gas, and mixed gas thereof. Generally, nitrogen gas is used as the inert gas. The inert gas used as the purge gas is supplied from outside the system.

Here, the purge gas refers to an inert gas introduced into the pressure-equalizing hopper 14 in order to prevent contact between a combustible reducing gas and air. A pressure of the purge gas is, for example, 0.2 to 1.0 MPa, and an injection amount of the purge gas is 1V to 3V relative to a capacity V of the pressure-equalizing hopper 14. The pressure-equalizing gas is a gas introduced into the pressure-equalizing hopper to reduce a difference between the pressure in the shaft furnace 20 and the pressure in the pressure-equalizing hopper 14, and refers to a gas from which water has been removed from an exhaust gas so that the water content is approximately 2 vol% in a dehydrating step. A pressure of the pressure-equalizing gas is, for example, 0.2 to 0.8 MPa, and an injection amount of the pressure-equalizing gas is 1V to 8V relative to the capacity V of the pressure-equalizing hopper 14. Here, purging refers to feeding a gas A (here, the inert gas) into a certain space (here, the pressure-equalizing hopper 14), replacing a gas B (here, the reducing gas) remaining in the space with the gas A, and removing the gas B. The pressure equalization refers to making the pressures equal.

After replacement with the inert gas, the pressure-equalizing hopper 14 closes the raw material inlet 14a, the purge gas inlet 14c, and the gas outlet 14d, opens the pressure-equalizing gas inlet 14e, and introduces the pressure-equalizing gas into the pressure-equalizing hopper 14 to be pressurized. The pressure-equalizing gas is pressurized to the pressure in the shaft furnace 20 by a pressurization device 40 described later. In order to discharge the inert gas remaining therein during an initial stage of the pressurization, it is preferable to keep the gas outlet 14d open for a certain period of time. For example, whether the inert gas has been discharged may be monitored using gas chromatography or the like, and the gas outlet 14d may be closed at a stage in which an amount of the inert gas discharged from the gas outlet 14d no longer fluctuates.

### (Shaft furnace 20)

The shaft furnace 20 includes a raw material charging section 24 for charging iron oxide as a raw material; a reduced iron discharge section 25 for discharging the reduced iron; a reducing gas injection port 28 disposed in a lower portion of the shaft furnace 20 for injecting a reducing gas; and an exhaust gas discharge port 29 disposed in an upper portion of the shaft furnace 20 for discharging exhaust gas. The iron oxide as the raw material is charged from the pressure-equalizing hopper 14 through the raw material charging section 24 at the top of the shaft furnace 20. An internal pressure of the shaft furnace 20 is higher than atmospheric pressure. For example, a pressure in the vicinity of the reducing gas injection port 28 is 0.1 to 1 MPa, and the exhaust gas is discharged from the exhaust gas discharge port 29 at a pressure lowered by an in-furnace pressure loss. The iron oxide is reduced by the reducing gas while descending in the shaft furnace 20 to become reduced iron. The reduced iron is discharged from the reduced iron discharge section 25. The reducing gas is heated to 900°C or higher by the heating device 50, and is introduced into the shaft furnace 20 through the reducing gas injection port 28. The iron oxide is reduced by the injected reducing gas. When the reducing gas is hydrogen gas, a reaction between the iron oxide and the hydrogen gas is represented by Formula (1A). As shown in Formula (1A), the hydrogen gas reacts with the iron oxide to form water (water vapor). Unreacted hydrogen gas (H₂) and water vapor (H₂O) are sent to the dehydration device 30 through the exhaust gas discharge port 29.

Fe₂O₃ + 3H₂ → 2Fe + 3H₂O (1A)

### (Dehydration device 30)

The dehydration device 30 dehydrates the exhaust gas discharged from the exhaust gas discharge port 29. The exhaust gas discharged from the exhaust gas discharge port 29 contains the unreacted hydrogen gas and the water vapor generated by the reduction reaction of iron oxide and the like. The dehydration device 30 dehydrates the exhaust gas by, for example, cooling the exhaust gas after dust removal. Since water inhibits the reduction reaction, it is preferable that a concentration of the water content in the exhaust gas is as low as possible. For example, when the concentration of the water content in the exhaust gas is 25 vol%, the water is preferably removed by dehydration until the concentration of the water content becomes 2 vol% or less. The dehydrated exhaust gas (circulating gas) is sent to the pressurization device 40. Before being dehydrated by the dehydration device 30, the exhaust gas may be subjected to dust removal by a dust removal device (not shown). A method of dust removal is not particularly limited, and examples thereof include a cyclone and a scrubber.

### (Pressurization device 40)

The pressurization device 40 pressurizes the circulating gas dehydrated by the dehydration device 30 to atmospheric pressure or higher, and sends the circulating gas to the heating device 50. A part of the pressurized circulating gas is introduced into the pressure-equalizing hopper 14 as the pressure-equalizing gas through the pressure-equalizing gas inlet 14e. The pressurization device 40 is, for example, a compressor.

### (Heating device 50)

The heating device 50 heats the circulating gas pressurized by the pressurization device 40 together with the source gas, and the resulting gas is introduced through the reducing gas injection port 28. The reducing gas is a gas for reducing the iron oxide as the raw material, and in the present embodiment, includes the circulating gas and the source gas. A temperature of the injected reducing gas is approximately 700°C to 1000°C. In addition, an injection amount of the reducing gas is approximately 1000 to 2000 Nm³/t-DRI. The reducing gas is injected through the reducing gas injection ports 28 arranged evenly in a circumferential direction of the shaft furnace 20. As the source gas, it is preferable to use hydrogen gas obtained by electrolysis of water or the like.

### (Method for Producing Reduced Iron)

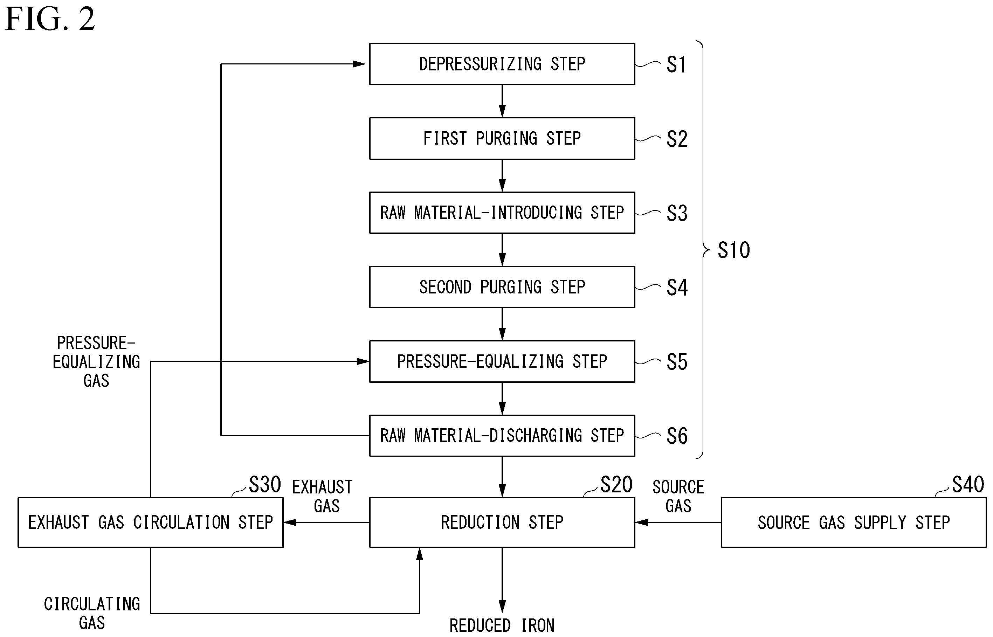

Next, the method for producing reduced iron according to the first embodiment will be described. FIG. 2 is a flowchart of the method for producing reduced iron according to the first embodiment. The method for producing reduced iron according to the first embodiment includes a raw material charging step S10 of charging the raw material into the shaft furnace 20 operating at a pressure higher than atmospheric pressure from the charging hopper 12 storing the raw material through the pressure-equalizing hopper 14 that performs pressure adjustment; a reduction step S20 of, after the raw material charging step S10, reacting the raw material with a reducing gas in the shaft furnace 20 to obtain reduced iron and exhaust gas after reduction; an exhaust gas circulation step S30 of, after the reduction step S20, circulating the exhaust gas after reduction and using the exhaust gas after reduction as a part of the reducing gas; and a source gas supply step S40. Hereinafter, the steps will be described.

### (Raw material charging step S10)

In the raw material charging step S10, the raw material is charged into the shaft furnace 20 operating at a pressure higher than atmospheric pressure, from the charging hopper 12 storing the raw material through the pressure-equalizing hopper 14 that performs pressure adjustment. The raw material charging step S10 includes a depressurizing step S1 of depressurizing the pressure-equalizing hopper 14 from a pressure in the shaft furnace 20 to atmospheric pressure; a first purging step S2 of, after the depressurizing step S1, replacing gas in the pressure-equalizing hopper 14 with a purge gas; a raw material-introducing step S3 of, after the first purging step S2, transferring the raw material from the charging hopper 12 to the pressure-equalizing hopper 14 whose internal gas has been replaced with the purge gas; a second purging step S4 of, after the raw material-introducing step S3, replacing air introduced into the pressure-equalizing hopper 14 in the raw material-introducing step S3 with the purge gas; a pressure-equalizing step S5 of, after the second purging step S4, pressurizing the pressure-equalizing hopper 14 from atmospheric pressure to the pressure in the shaft furnace 20 with a pressure-equalizing gas; and a raw material-discharging step S6 of, after the pressure-equalizing step S5, transferring the raw material from the pressurized pressure-equalizing hopper 14 into the shaft furnace 20.

### (Depressurizing step S1)

In the depressurizing step S1, the pressure-equalizing hopper 14 is depressurized from the pressure in the shaft furnace 20 to atmospheric pressure. Specifically, the raw material outlet 14b is closed and the gas outlet 14d is opened, whereby the pressure of the pressure-equalizing hopper 14 is reduced from the pressure in the shaft furnace 20 to atmospheric pressure.

### (First purging step S2)

In the first purging step S2, after the depressurizing step S1, gas in the pressure-equalizing hopper 14 is replaced with a purge gas. Specifically, the purge gas inlet 14c is opened to introduce the inert gas, which is the purge gas, into the pressure-equalizing hopper 14. As a result, the gas remaining in the pressure-equalizing hopper 14 after charging the raw material from the pressure-equalizing hopper 14 into the shaft furnace 20 can be replaced with the inert gas. It is preferable to perform replacement with an amount of the inert gas equal to or more than three times a volume of the pressure-equalizing hopper 14. A gas component may be measured to confirm that a concentration of a replacement target gas (reducing gas) has become equal to or less than a specified value, whereby the end of the first purging step S2 is determined.

### (Raw material-introducing step S3)

In the raw material-introducing step S3, after the first purging step S2, the iron oxide as the raw material is transferred from the charging hopper 12 to the pressure-equalizing hopper 14 in which the internal gas has been replaced with the purge gas. Specifically, the purge gas inlet 14c is closed and the raw material inlet 14a is opened to transfer the raw material from the charging hopper 12 to the depressurized pressure-equalizing hopper 14 in which the internal gas has been replaced with the purge gas.

### (Second purging step S4)

In the second purging step S4, after the raw material-introducing step S3, air introduced into the pressure-equalizing hopper 14 in the raw material-introducing step S3 is replaced with the purge gas. The purge gas is the inert gas. Specifically, the purge gas inlet 14c is opened to introduce the inert gas, which is the purge gas, into the pressure-equalizing hopper 14. As a result, air introduced into the pressure-equalizing hopper 14 together with the raw material in the raw material-introducing step S3 can be replaced with the inert gas.

### (Pressure-equalizing step S5)

In the pressure-equalizing step S5, after the second purging step S4, the pressure-equalizing hopper 14 is pressurized from atmospheric pressure to the pressure in the shaft furnace 20 with a pressure-equalizing gas. The pressure in the shaft furnace 20 is usually controlled. The pressure-equalizing gas may be pressurized to a target control value of the pressure in the shaft furnace 20.

Specifically, the raw material inlet 14a and the gas outlet 14d are closed, the pressure-equalizing gas inlet 14e is opened, and the pressure-equalizing gas is introduced into the pressure-equalizing hopper 14 to pressurize the pressure-equalizing hopper 14. The pressure-equalizing gas is pressurized to the pressure in the shaft furnace (in-furnace pressure) by the pressurization device 40. The pressure-equalizing gas is a part of the circulating gas dehydrated by the dehydration device 30. At an early stage of the pressure-equalizing step S5, it is preferable that the inert gas (nitrogen gas) introduced in the second purging step S4 is displaced by the pressure-equalizing gas, because the inert gas (nitrogen gas) is prevented from accumulating in the shaft furnace 20. When pushing out the nitrogen gas with the pressure-equalizing gas, the gas outlet 14d is kept open for a while to exhaust the inert gas (nitrogen gas). An opening time of the gas outlet 14d can be determined by checking a fluctuation of the inert gas by gas chromatography or the like.

### (Raw material-discharging step S6)

In the raw material-discharging step S6, after the pressure-equalizing step S5, the raw material is transferred from the pressurized pressure-equalizing hopper 14 into the shaft furnace 20. Specifically, the pressure-equalizing gas inlet 14e is closed and the raw material outlet 14b is opened to transfer the raw material in the pressure-equalizing hopper from the pressurized pressure-equalizing hopper into the shaft furnace. After the raw material-discharging step S6 is completed, the process returns to the depressurizing step S1, whereby the raw material can be continuously charged into the shaft furnace 20.

### (Reduction step S20)

In the reduction step S20, after the raw material charging step S10, the raw material is reacted with the reducing gas in the shaft furnace 20 to obtain reduced iron and an exhaust gas after reduction. Specifically, in the shaft furnace 20, the raw material is reduced by the reducing gas injected from the reducing gas injection port 28 to become reduced iron (direct reduced iron), and is discharged from the reduced iron discharge section 25. When the source gas is hydrogen gas, the iron oxide reacts with the hydrogen gas as shown in Formula (1A) described above to generate reduced iron and water. Unreacted hydrogen gas and water vapor are discharged from the exhaust gas discharge port 29 as an exhaust gas (exhaust gas after reduction).

### (Exhaust gas circulation step S30)

In the exhaust gas circulation step S30, after the reduction step S20, the exhaust gas (exhaust gas after reduction) discharged in the reduction step S20 is circulated and used as a part of the reducing gas. When the hydrogen gas is used as the source gas, the exhaust gas is hydrogen gas and water. The exhaust gas circulation step S30 includes a dehydrating step of removing water from the exhaust gas after reduction. The exhaust gas discharged from the exhaust gas discharge port 29 is dehydrated by the dehydration device 30. The dehydrated exhaust gas (circulating gas) is pressurized by the pressurization device 40, and a part of the circulating gas is used as the pressure-equalizing gas in the pressure-equalizing step S5. That is, the pressure-equalizing gas is a gas obtained by removing water from the exhaust gas in the dehydrating step. The remaining circulating gas not used in the pressure-equalizing step S5 is heated by the heating device 50 to form a reducing gas and is then recirculated for reuse. That is, the remaining circulating gas not used in the pressure-equalizing step S5, which is heated by the heating device 50 and introduced into the shaft furnace 20, is used as a part of the reducing gas.

### (Source gas supply step S40)

In the source gas supply step S40, hydrogen gas corresponding to an amount consumed for reduction of the raw material (iron oxide) in the reduction step S20 is introduced as the source gas into the shaft furnace 20 through the heating device 50. The amount of hydrogen gas introduced is controlled by analyzing a hydrogen concentration in the exhaust gas, decreasing the amount of hydrogen gas introduced when the hydrogen concentration exceeds an upper limit of a specified range, and increasing the amount of hydrogen gas introduced when the hydrogen concentration is below the specified range.

The method for producing reduced iron according to the first embodiment and the apparatus 100 for producing direct reduced iron, used to carry out the production method, have been described above. With the method for producing reduced iron according to the first embodiment, by purging a combustible gas with an inert gas (nitrogen gas), safe operation is possible even when a circulating gas containing hydrogen is used as the pressure-equalizing gas. As a result of using the exhaust gas after reduction as the pressure-equalizing gas, concentration of nitrogen, carbon dioxide, and the like accompanying circulation of the exhaust gas can be prevented, so that reducing power of the reducing gas is prevented from decreasing. In addition, because such concentration does not occur, periodic release of the exhaust gas is also unnecessary.

### (Second Embodiment)

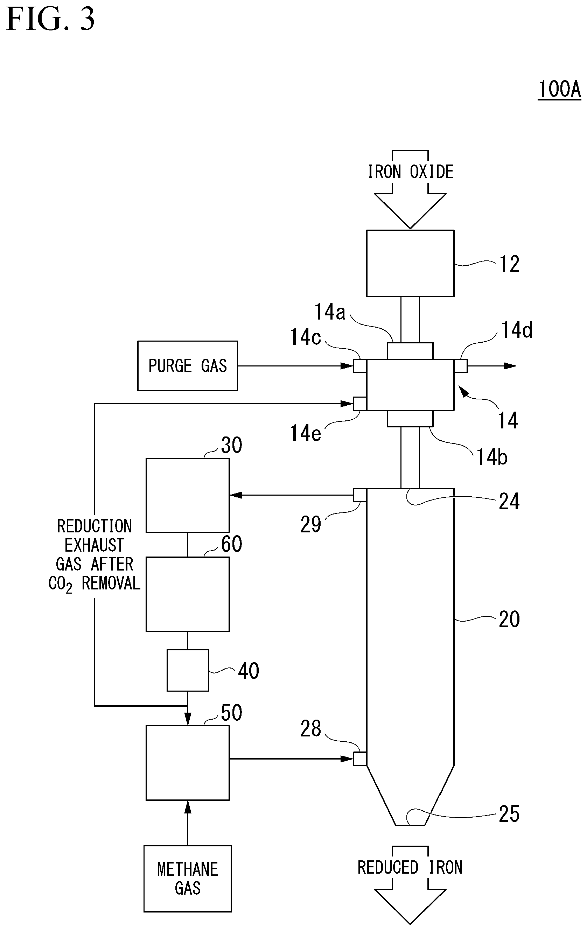

Next, an apparatus 100A for producing direct reduced iron, which is used to perform a method for producing reduced iron according to a second embodiment, will be described. FIG. 3 is a flowchart showing an example of a direct reduction apparatus according to the second embodiment of the present invention. The apparatus 100A for producing direct reduced iron includes a charging hopper 12 that stores iron oxide as a raw material; a pressure-equalizing hopper 14 that performs pressure adjustment between atmospheric pressure and a pressure in the shaft furnace; a shaft furnace 20 that produces direct reduced iron using methane gas as a source gas; a dehydration device 30 that dehydrates exhaust gas from the shaft furnace 20 to obtain a circulating gas; a decarbonization device 60 that removes carbon dioxide from the circulating gas; a pressurization device 40 that pressurizes the circulating gas after removal of water and carbon dioxide; and a heating device 50 that heats the pressurized circulating gas together with the source gas to form a reducing gas.

### (Charging hopper 12)

The charging hopper 12 stores iron oxide. The charging hopper 12 transfers the stored iron oxide, which is the raw material, to the pressure-equalizing hopper 14, which is at atmospheric pressure, through the raw material inlet 14a.

### (Pressure-equalizing hopper 14)

After the raw material is transferred, the pressure-equalizing hopper 14 performs pressure adjustment, and after the pressure adjustment, sends the raw material to the raw material charging section 24 of the shaft furnace 20. The pressure-equalizing hopper 14 includes a hopper main body; a raw material inlet 14a through which the raw material is introduced from the charging hopper 12; a raw material outlet 14b through which the raw material is sent to the raw material charging section 24 of the shaft furnace 20 after pressure equalization; a purge gas inlet 14c through which a purge gas is introduced; a gas outlet 14d through which the purge gas and the like are discharged; and a pressure-equalizing gas inlet 14e through which a pressure-equalizing gas is introduced into the pressure-equalizing hopper 14. The raw material inlet 14a is connected to the charging hopper 12, and the raw material outlet 14b is connected to the raw material charging section 24 of the shaft furnace 20.

Hereinafter, the operation of the pressure-equalizing hopper 14 will be described. The pressure-equalizing hopper 14 closes the raw material inlet 14a, the raw material outlet 14b, the purge gas inlet 14c, and the pressure-equalizing gas inlet 14e, opens the gas outlet 14d to be depressurized so that the internal pressure thereof becomes atmospheric pressure. Next, the purge gas inlet 14c is opened, and an inert gas as the purge gas is introduced into the pressure-equalizing hopper 14. As a result, furnace gas remaining in the pressure-equalizing hopper 14 can be replaced with the inert gas.
Next, the pressure-equalizing hopper 14 closes the purge gas inlet 14c, opens the raw material inlet 14a, and transfers the raw material from the charging hopper 12 to the pressure-equalizing hopper 14 filled with the inert gas. After transferring the raw material, the purge gas inlet 14c is opened to introduce the inert gas into the pressure-equalizing hopper 14. As a result, air introduced into the pressure-equalizing hopper 14 together with the raw material can be replaced with the inert gas. Here, examples of the inert gas include nitrogen gas, a noble gas, CO₂, H₂O gas, and mixed gas thereof. Nitrogen gas is preferably used as the inert gas.

After replacement with the inert gas, the pressure-equalizing hopper 14 closes the raw material inlet 14a and the gas outlet 14d, opens the pressure-equalizing gas inlet 14e, and introduces the pressure-equalizing gas into the pressure-equalizing hopper 14 to pressurize the pressure-equalizing hopper 14. Here, the replacement may be judged to be complete when an inert gas in an amount of equal to or more than three times the volume of the pressure-equalizing hopper 14 has been introduced into the pressure-equalizing hopper 14, or may be judged based on measurement of gas components and confirmation that a concentration of a replacement target gas (reducing gas) has become equal to or less than a specified value. The pressure-equalizing gas is pressurized to the pressure in the shaft furnace 20 by a pressurization device 40 described later. In order to discharge the inert gas remaining inside at an early stage of pressurization, the gas outlet 14d may be kept open for a certain period of time. For example, whether the inert gas has been discharged may be monitored using gas chromatography or the like, and the gas outlet 14d may be closed at a stage in which an amount of the inert gas discharged from the gas outlet 14d no longer fluctuates.

### (Shaft furnace 20)

The shaft furnace 20 includes a raw material charging section 24 for charging iron oxide as a raw material; a reduced iron discharge section 25 for discharging the reduced iron; a reducing gas injection port 28 disposed in a lower portion of the shaft furnace 20 for injecting a reducing gas; and an exhaust gas discharge port 29 disposed in an upper portion of the shaft furnace 20 for discharging exhaust gas. The iron oxide as the raw material is charged from the pressure-equalizing hopper 14 through the raw material charging section 24 at the top of the shaft furnace 20. The internal pressure of the shaft furnace 20 is higher than atmospheric pressure. For example, the in-furnace pressure is 0.1 to 1 MPa. The iron oxide is reduced by carbon monoxide (CO) and hydrogen gas (reducing gas) generated from methane gas while descending in the shaft furnace 20 to become reduced iron. The reduced iron is discharged from the reduced iron discharge section 25. The reducing gas is heated by the heating device 50 and is introduced into the shaft furnace 20 through the reducing gas injection port 28. The iron oxide is reduced by the injected reducing gas. Next, generation of reduced iron based on the methane gas in the shaft furnace 20 will be described.

The methane gas introduced as the source gas reacts with water in the shaft furnace 20 to generate carbon monoxide and hydrogen as shown in Formula (2A). Similarly, the methane gas introduced as the source gas reacts with carbon dioxide in the shaft furnace 20 to generate carbon monoxide and hydrogen as shown in Formula (2B). The carbon monoxide generated by the above-described reactions reacts with iron oxide as shown in Formula (2C) to generate reduced iron and carbon dioxide. As shown in Formula (2D), the reduced iron further reacts with methane gas, thereby contributing to an increase in the carbon concentration in the reduced iron. As the carbon concentration in the reduced iron increases, a melting point of the reduced iron decreases, making the reduced iron easier to use in an electric furnace and the like.

The hydrogen gas generated in the reaction of Formula (2D) is used for reduction of iron oxide, thereby generating reduced iron and water. Specifically, the reaction between iron oxide and hydrogen gas is as shown in Formula (1A) described above. Unreacted methane gas (CH₄), hydrogen gas (H₂) generated by reaction, carbon monoxide, carbon dioxide, and water vapor (H₂O) are sent to the dehydration device 30 through the exhaust gas discharge port 29.

H₂O + CH₄ →CO + 3H₂ (2A)

CO₂ + CH₄ → 2CO + 2H₂ (2B)

Fe₂O₃ + 3CO → 2Fe + 3CO₂ (2C)

3Fe + CH₄ → Fe₃C + 2H₂ (2D)

### (Dehydration device 30)

The dehydration device 30 dehydrates the exhaust gas discharged from the exhaust gas discharge port 29. The exhaust gas discharged from the exhaust gas discharge port 29 contains the unreacted methane gas, and water vapor, hydrogen gas, carbon monoxide, and carbon dioxide generated by the reduction reaction of iron oxide and the like. The dehydration device 30 dehydrates the exhaust gas by, for example, cooling the exhaust gas after dust removal. Since water inhibits the reduction reaction, it is preferable that the concentration of the water content in the exhaust gas is as low as possible. For example, when the concentration of the water content in the exhaust gas is 25 vol%, the water is preferably removed by dehydration until the concentration of the water content becomes 2 vol% or less. The dehydrated exhaust gas (circulating gas) is sent to the decarbonization device 60. Before being dehydrated by the dehydration device 30, the exhaust gas may be subjected to dust removal by a dust removal device (not shown). A method of dust removal is not particularly limited, and examples thereof include a cyclone and a scrubber.

The decarbonization device 60 removes carbon dioxide in the circulating gas after dehydration. Since the carbon dioxide inhibits the reduction reaction, it is preferable to remove the carbon dioxide as much as possible. The decarbonization device 60 preferably removes 90 vol% or more of the carbon dioxide from the circulating gas. As a result, concentration of carbon dioxide in the circulating gas can be prevented. For separation of carbon dioxide from the circulating gas, for example, a chemical adsorption method can be used. The circulating gas after separating carbon dioxide is sent to the pressurization device 40.

### (Pressurization device 40)

The pressurization device 40 pressurizes the circulating gas after removal of carbon dioxide to a pressure equal to or higher than atmospheric pressure, and sends the circulating gas to the heating device 50. A part of the pressurized circulating gas is introduced into the pressure-equalizing hopper 14 as the pressure-equalizing gas through the pressure-equalizing gas inlet 14e. The pressurization device 40 is, for example, a compressor.

### (Heating device 50)

The heating device 50 heats the circulating gas pressurized by the pressurization device 40 together with the source gas, and the resulting gas is introduced through the reducing gas injection port 28. A temperature of the injected reducing gas is approximately 700°C to 1000°C. In addition, an injection amount of the reducing gas is approximately 1000 to 2000 Nm³/t-DRI. It is preferable to use methane gas as the source gas.

### (Method for Producing Reduced Iron)

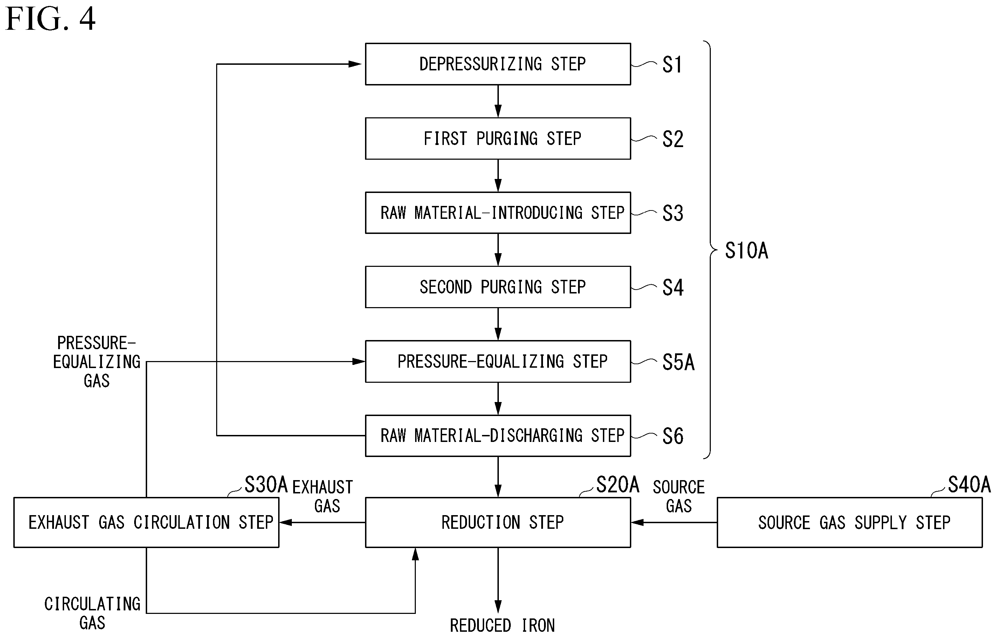

Next, the method for producing reduced iron according to the second embodiment will be described. FIG. 4 is a flowchart of the method for producing reduced iron according to the second embodiment. The method for producing reduced iron according to the second embodiment includes a raw material charging step S10A of charging a raw material into the shaft furnace 20 operating at a pressure higher than atmospheric pressure from a charging hopper 12 storing the raw material through a pressure-equalizing hopper 14 that performs pressure adjustment; a reduction step S20A of, after the raw material charging step S10A, reacting the raw material with a reducing gas in the shaft furnace 20 to obtain reduced iron and exhaust gas after reduction; an exhaust gas circulation step S30A of circulating the exhaust gas after reduction and using the exhaust gas after reduction as a part of the reducing gas; and a source gas supply step S40A. Hereinafter, the steps will be described.

### (Raw material charging step S10A)

In the raw material charging step S10A, the raw material is charged into the shaft furnace 20 operating at a pressure higher than atmospheric pressure, from the charging hopper 12 storing the raw material through the pressure-equalizing hopper 14 that performs pressure adjustment. The raw material charging step S10A includes a depressurizing step of depressurizing the pressure-equalizing hopper 14 from a pressure in the shaft furnace 20 to atmospheric pressure; a first purging step S2 of, after the depressurizing step S1, replacing gas in the pressure-equalizing hopper 14 with a purge gas; a raw material-introducing step S3 of, after the first purging step S2, transferring the raw material from the charging hopper 12 to the pressure-equalizing hopper 14 whose internal gas has been replaced with the purge gas; a second purging step S4 of, after the raw material-introducing step S3, replacing air introduced into the pressure-equalizing hopper 14 in the raw material-introducing step S3 with the purge gas; a pressure-equalizing step S5A of, after the second purging step S4, pressurizing the pressure-equalizing hopper 14 from atmospheric pressure to the pressure in the shaft furnace 20 with a pressure-equalizing gas; and a raw material-discharging step S6 of, after the pressure-equalizing step S5A, transferring the raw material from the pressurized pressure-equalizing hopper 14 into the shaft furnace 20.

### (Depressurizing step S1)

In the depressurizing step S1, the pressure-equalizing hopper 14 is depressurized from the pressure in the shaft furnace 20 to atmospheric pressure. Specifically, the raw material outlet 14b is closed and the gas outlet 14d is opened, whereby the pressure of the pressure-equalizing hopper 14 is reduced from the pressure in the shaft furnace 20 to atmospheric pressure.

### (First purging step S2)

In the first purging step S2, after the depressurizing step S1, gas in the pressure-equalizing hopper 14 is replaced with a purge gas. Specifically, the purge gas inlet 14c is opened to introduce the inert gas, which is the purge gas, into the pressure-equalizing hopper 14. As a result, the gas remaining in the pressure-equalizing hopper 14 after charging the raw material from the pressure-equalizing hopper 14 into the shaft furnace 20 can be replaced with the inert gas.

### (Raw material-introducing step S3)

In the raw material-introducing step S3, after the first purging step S2, the iron oxide as the raw material is transferred from the charging hopper 12 to the pressure-equalizing hopper 14 in which the internal gas has been replaced with the purge gas. Specifically, the purge gas inlet 14c is closed and the raw material inlet 14a is opened to transfer the raw material from the charging hopper 12 to the depressurized pressure-equalizing hopper 14 in which the internal gas has been replaced with the purge gas.

### (Second purging step S4)

In the second purging step S4, after the raw material-introducing step S3, air introduced into the pressure-equalizing hopper 14 in the raw material-introducing step S3 is replaced with the purge gas. Specifically, the purge gas inlet 14c is opened to introduce the inert gas, which is the purge gas, into the pressure-equalizing hopper 14. As a result, air introduced into the pressure-equalizing hopper 14 together with the raw material in the raw material-introducing step S3 can be replaced with the inert gas.

### (Pressure-equalizing step S5A)

In the pressure-equalizing step S5A, after the second purging step S4, the pressure-equalizing hopper 14 is pressurized from atmospheric pressure to the pressure in the shaft furnace 20 with a pressure-equalizing gas. Specifically, the raw material inlet 14a and the gas outlet 14d are closed, the pressure-equalizing gas inlet 14e is opened, and the pressure-equalizing gas is introduced into the pressure-equalizing hopper 14 to pressurize the pressure-equalizing hopper 14. The pressure-equalizing gas is pressurized to the pressure in the shaft furnace (in-furnace pressure) by the pressurization device 40. The pressure-equalizing gas is a part of the circulating gas dehydrated by the dehydration device 30. At an early stage of the pressure-equalizing step S5A, it is preferable that the inert gas (nitrogen gas) introduced in the second purging step S4 is displaced by the pressure-equalizing gas, because the inert gas (nitrogen gas) is prevented from accumulating in the shaft furnace 20. When pushing out the nitrogen gas with the pressure-equalizing gas, the gas outlet 14d is kept open for a while to exhaust the inert gas (nitrogen gas). An opening time of the gas outlet 14d can be determined by checking a fluctuation of the inert gas (for example, the nitrogen gas) by gas chromatography or the like.

### (Raw material-discharging step S6)

In the raw material-discharging step S6, after the pressure-equalizing step S5A, the raw material is transferred from the pressurized pressure-equalizing hopper 14 into the shaft furnace 20. Specifically, the pressure-equalizing gas inlet 14e is closed and the raw material outlet 14b is opened to transfer the raw material in the pressure-equalizing hopper from the pressurized pressure-equalizing hopper into the shaft furnace. After the raw material-discharging step S6 is completed, the process returns to the depressurizing step S1, whereby the raw material can be continuously charged into the shaft furnace 20.

### (Reduction step S20A)

In the reduction step S20A, after the raw material charging step S10A, the raw material is reacted with the reducing gas in the shaft furnace 20 to obtain reduced iron and an exhaust gas after reduction. Specifically, in the shaft furnace 20, the raw material is reduced by the reducing gas injected from the reducing gas injection port 28 to become reduced iron (direct reduced iron), and is discharged from the reduced iron discharge section 25. When the source gas is methane gas, iron oxide reacts with carbon monoxide generated from the methane gas as represented by Formulas (2A) to (2D) described above, thereby generating reduced iron and carbon dioxide. Unreacted methane gas, and hydrogen gas, carbon monoxide, carbon dioxide, and water vapor generated in the above-described reactions are discharged as an exhaust gas from the exhaust gas discharge port 29.

### (Exhaust gas circulation step S30A)

In the exhaust gas circulation step S30A, the exhaust gas (exhaust gas after the reduction reaction) discharged in the reduction step S20 is circulated and used as a part of the reducing gas. When methane gas is used as the source gas, the exhaust gas is unreacted methane gas, and hydrogen gas, carbon monoxide, carbon dioxide, and water vapor generated by the above-described reactions. The exhaust gas discharged from the exhaust gas discharge port 29 is dehydrated by the dehydration device 30, and then carbon dioxide is removed by the decarbonization device 60. That is, the exhaust gas circulation step S30A includes a dehydrating step of dehydrating the exhaust gas and a decarbonizing step of removing carbon dioxide from the exhaust gas. The circulating gas from which carbon dioxide has been removed is pressurized by the pressurization device 40, and a part of the circulating gas is used as the pressure-equalizing gas in the pressure-equalizing step S5A. The remaining circulating gas not used in the pressure-equalizing step S5A is heated by the heating device 50 to form a reducing gas and is then recirculated for reuse. That is, the pressure-equalizing gas is a gas obtained by removing water and carbon dioxide from the exhaust gas in the dehydrating step and the decarbonizing step. A combustion exhaust gas obtained by combustion in a heating furnace or the like outside the apparatus 100 for producing direct reduced iron and subsequent removal of carbon dioxide may be added to the pressure-equalizing gas.

### (Source gas supply step S40A)

In the source gas supply step S40A, methane gas corresponding to an amount consumed for reduction of the raw material (iron oxide) in the reduction step S20 is introduced as the source gas into the shaft furnace 20 through the heating device 50. The amount of methane gas introduced is increased or decreased by calculating a required injection amount of methane gas.

The method for producing reduced iron according to the second embodiment and the apparatus 100A for producing direct reduced iron, used to carry out the production method, have been described above. With the method for producing reduced iron according to the second embodiment, by purging a combustible gas with an inert gas (nitrogen gas), safe operation is possible even when a circulating gas containing hydrogen is used as the pressure-equalizing gas. As a result of using the exhaust gas after reduction as the pressure-equalizing gas, concentration of nitrogen accompanying circulation of the exhaust gas can be prevented, so that reducing power of the reducing gas is prevented from decreasing. In addition, because such concentration does not occur, periodic release of the exhaust gas is also unnecessary.

The technical scope of the present invention is not limited to the above-described embodiments, and various modifications can be made without departing from the gist of the present invention. In addition, it is possible to appropriately replace the components in the above-described embodiments with known components without departing from the gist of the present invention, and the above-described modifications may be combined as appropriate.

### INDUSTRIAL APPLICABILITY

The method for producing reduced iron according to the present disclosure can suppress the concentration of unnecessary components such as nitrogen and carbon dioxide, and can maintain the reducing performance, and thus has high industrial applicability.

### REFERENCE SIGNS LIST

12 Charging hopper, 14 Pressure-equalizing hopper, 20 Shaft furnace, 24 Raw material charging section, 25 Reduced iron discharge section, 28 Reducing gas injection port, 29 Exhaust gas discharge port, 30 Dehydration device, 40 Pressurization device, 60 Decarbonization device

## Claims

1. A method for producing reduced iron, comprising:
a raw material charging step of charging a raw material into an inside of a shaft furnace operating at a pressure higher than atmospheric pressure, from a charging hopper storing the raw material through a pressure-equalizing hopper that performs pressure adjustment;
a reduction step of, after the raw material charging step, reacting the raw material with a reducing gas in the shaft furnace to obtain reduced iron and an exhaust gas after reduction; and
an exhaust gas circulation step of, after the reduction step, circulating the exhaust gas after reduction and using the exhaust gas after reduction as a part of the reducing gas,
wherein the raw material charging step includes
a depressurizing step of depressurizing the pressure-equalizing hopper from a pressure in the shaft furnace to atmospheric pressure,
a first purging step of, after the depressurizing step, replacing gas in the pressure-equalizing hopper with a purge gas,
a raw material-introducing step of, after the first purging step, transferring the raw material from the charging hopper to the pressure-equalizing hopper replaced with the purge gas,
a second purging step of, after the raw material-introducing step, replacing air introduced into the pressure-equalizing hopper in the raw material-introducing step with the purge gas,
a pressure-equalizing step of, after the second purging step, pressurizing the pressure-equalizing hopper from atmospheric pressure to the pressure in the shaft furnace with a pressure-equalizing gas, and
a raw material-discharging step of, after the pressure-equalizing step, transferring the raw material from the pressurized pressure-equalizing hopper into the shaft furnace,
the exhaust gas circulation step includes
a dehydrating step of removing water from the exhaust gas after reduction,
the purge gas is an inert gas, and
the pressure-equalizing gas is a gas obtained by removing water from the exhaust gas in the dehydrating step.

2. The method for producing reduced iron according to Claim 1,
wherein the exhaust gas circulation step further includes a decarbonizing step of removing carbon dioxide from the exhaust gas, and
the pressure-equalizing gas is a gas obtained by removing water and carbon dioxide from the exhaust gas in the dehydrating step and the decarbonizing step.
